# EUROPÄISCHE PATENTSCHRIFT

(11) **EP 1 889 769 B1**
(45) Veröffentlichungstag und Bekanntmachung des Hinweises auf die Patenterteilung: **14.03.2018**
(21) Anmeldenummer: 07014564.4
(22) Anmeldetag: 25.07.2007
(51) Int. Cl.: B60W 20/00, B60K 6/48, B60K 6/365, B60K 6/547, B60W 10/08, F16H 61/02, B60L 3/00, B60L 11/14, B60K 6/383, F16H 3/54, F16H 61/686, B60W 10/115, B60W 10/10

(54) **Getriebe zum Koppeln einer Starter-Generator-E-Maschine mit einer Brennkraftmaschine**
Transmission system for coupling a starter generator electric motor with a combustion engine
Engrenage destiné à coupler une machine électrique à starter/générateur dotée d'un moteur à combustion interne

(30) Priorität: 17.08.2006 DE 102006038569
(43) Veröffentlichungstag der Anmeldung: 20.02.2008
(73) Patentinhaber: Schaeffler Technologies AG & Co. KG, 91074 Herzogenaurach (DE)
(72) Erfinder: Greb, Peter, 77815 Bühl (DE); Friedmann, Oswald, 77839 Lichtenau (DE)

(56) Entgegenhaltungen:
- JP-A- H0 893 496
- US-A1- 2001 018 025
- US-A1- 2004 164 560

## Beschreibung

Die Erfindung betrifft ein Getriebe zum Koppeln einer Starter-Generator-E-Maschine mit einer Brennkraftmaschine gemäß dem Oberbegriff des Anspruchs 1. Ein derartiges Getriebe ist aus der US-A- 2004/0164560 bekannt. In modernen Kraftfahrzeugen finden zunehmend Elektromaschinen Verwendung, die sowohl zum Anlassen der Brennkraftmaschine verwendbar sind, als auch als Generatoren zum Laden der Batterie in bestimmten Betriebszuständen verwendbar sind. Die Starterfunktion lässt sich zusätzlich einsetzen, um in bestimmten Betriebszuständen zusätzliches Anfahrmoment bereitzustellen. Mit der Generatorfunktion kann beispielsweise beim Bremsen des Fahrzeugs Energie rückgewonnen werden oder die Batterie in bestimmten Betriebszuständen nachgeladen werden. Somit dient die E-Maschine sowohl zur Verbesserung des Fahrkomforts als auch zur Verbrauchsminderung.

Zur Kupplung zwischen E-Maschine und Brennkraftmaschine ist ein Getriebe vorgesehen, das bei niedrigen Drehzahlen der Brennkraftmaschine mit einer hohen Übersetzung zwischen Drehzahl der E-Maschine und Drehzahl der Brennkraftmaschine arbeitet und bei hohen Drehzahlen der Brennkraftmaschine mit einer niedrigen Übersetzung arbeitet. Damit wird erreicht, dass die E-Maschine bei niedrigen Drehzahlen der Brennkraftmaschine ausreichend elektrische Energie liefert bzw. dass für ein Anlassen der Brennkraftmaschine ausreichend Drehmoment zur Verfügung steht. Mit der niedrigeren Übersetzung wird gewährleistet, dass die E-Maschine bei hohen Drehzahlen der Brennkraftmaschine nicht überdreht.

Eine Übersetzungsumschalteinrichtung ist normalerweise fliehkraftbetätigt, so dass bei niedrigen Drehzahlen mit hoher Übersetzung gearbeitet wird. Bei gutem Batterieladezustand reicht auch die niedrige Übersetzung, da die Batterie nicht geladen werden muss und geringere Antriebsverluste für die E-Maschine auftreten. Daher ist es energetisch sinnvoll, die Übersetzungsumschaltung bedarfsgerecht aktiv vorzunehmen.

Für die Funktionssicherheit bei Stromausfall ergibt sich bei einem aktiven Umschalten ein Zielkonflikt. Wird die Ansteuerung derart gewählt, dass bei Stromausfall eine niedrigere Übersetzung bestehen bleibt, kann die Brennkraftmaschine unter Umständen nicht mehr angelassen werden, da nicht genügend Drehmoment zur Verfügung steht.

Wird die Ansteuereung dagegen derart gewählt, dass bei Stromausfall eine hohe Übersetzung bestehen bleibt, wird die E-Maschine bei hohen Kurbelwellendrehzahlen überdreht und zerstört.

Der Erfindung liegt die Aufgabe zugrunde, ein gattungsgemäßes Getriebe derart weiter zu entwickeln, dass auch bei Stromausfall eine einwandfreie Funktionssicherheit gewährleistet ist.

Diese Aufgabe wird mit einem Getriebe zum Koppeln einer Starter-Generator-E-Maschine mit einer Brennkraftmaschine mit von der Drehzahl der Brennkraftmaschine abhängiger Übersetzung gelöst, wobei das Verhältnis der Drehzahl der E-Maschine zu der der Brennkraftmaschine bei einer niedrigen Drehzahl der Brennkraftmaschine größer ist als bei einer hohen Drehzahl der Brennkraftmaschine und für die Übersetzungsumschaltung eine Umschalteinrichtung vorgesehen ist, und wobei die Umschalteinrichtung mittels Federkraft in einem Zustand gehalten ist, in dem das Drehzahlverhältnis groß ist und mit steigender Drehzahl der Brennkraftmaschine in einen Zustand geschaltet wird, in dem das Drehzahlverhältnis kleiner ist.

Bei einer vorteilhaften Ausführungsform des erfindungsgemäßen Getriebes ist eine Ausgangswelle der E-Maschine drehfest mit einem Sonnenrad eines Planetengetriebes verbunden, eine Ausgangswelle der Brennkraftmaschine ist drehfest mit einem Planetenradträger verbunden, der über einen Freilauf mit dem Sonnenrad gekuppelt ist, der ermöglicht, dass das Sonnenrad mit höherer Drehzahl als der Planetenradträger dreht. Die Planetenräder sind mit einem Hohlrad verbunden, an dem die Umschalteinrichtung angreift.

Mit Vorteil enthält die Umschalteinrichtung eine an dem Hohlrad angreifende Bremse, die durch die Kraft der Feder geschlossen wird.

Bevorzugt enthält die Umschalteinrichtung weiter eine mit Schmieröl der Brennkraftmaschine beaufschlagbare Kolben-/Zylindereinheit, mittels der die Bremse gegen die Kraft der Feder lösbar ist.

In einer Zuleitung zu der Kolben-/Zylindereinheit kann ein Ventil angeordnet sein, über das die Kolben-/Zylindereinheit wahlweise mit einer Schmieröl der Brennkraftmaschine führenden Leitung oder einer drucklosen Leistung verbindbar ist.

Das Ventil kann elektrisch betätigbar sein und bei Stromausfall selbsttätig öffnen und die Kolben-/Zylindereinheit mit der Schmieröl der Brennkraftmaschine führenden Leitung verbinden.

Die Feder kann als insgesamt scheibenförmige Tellerfeder ausgebildet sein, die an ihrem radial äußeren Umfang mit der Bremse zusammenwirkt, an ihrem radial inneren Umfang mit dem Kolben der Kolben-/Zylindereinheit zusammenwirkt und sich in einem Zwischenbereich an einem Ringlager abstützt.

Die Erfindung wird im Folgenden anhand schematischer Zeichnung beispielsweise und mit weiteren Einzelheiten erläutert.

In den Figuren stellen dar:
- Fig. 1: eine schematische Ansicht eines erfindungsgemäßen Getriebes bei offener Bremse,
- Fig. 2: die Ansicht der Fig. 1 bei geschlossener Bremse und
- Fig. 3: Kurven zur Erläuterung der Funktionsweise des Getriebes bei normalem Fahrbetrieb und bei Stromausfall.

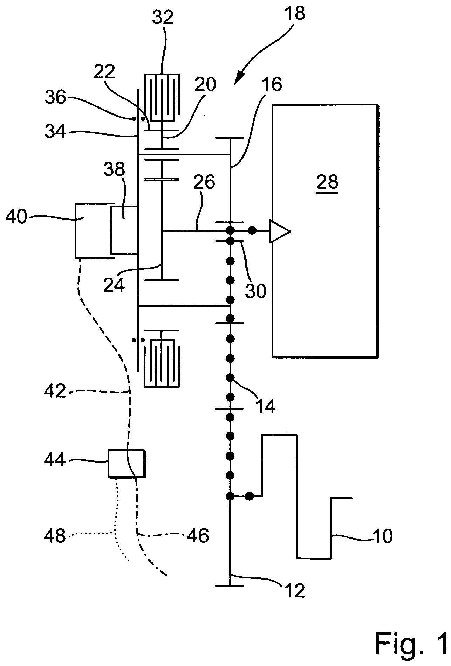

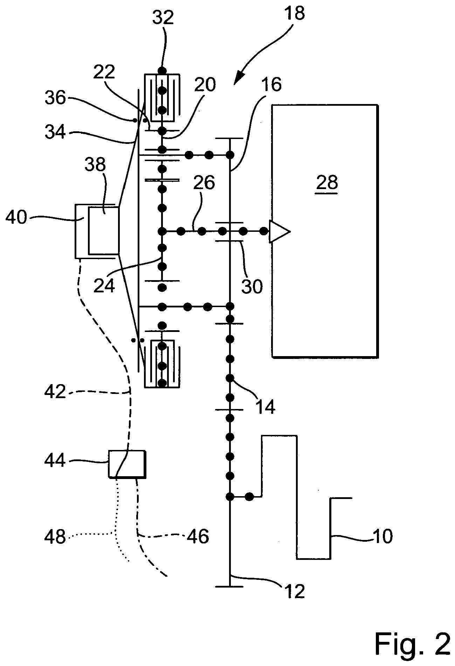

Gemäß Fig. 1 und 2 ist eine Kurbelwelle 10 einer nicht dargestellten Brennkraftmaschine drehfest mit einem Zahnrad 12 verbunden, das über eine Zahnkette 14 in drehfestem Eingriff mit einer Verzahnung eines Planetenradträgers 16 ist, der zu einem insgesamt mit 18 bezeichneten Planetengetriebe gehört.

Auf dem Planetenradträger 16 sind Planetenräder 20 gelagert, die mit der Innenverzahnung eines Hohlrades 22 und der Außenverzahnung eines Sonnenrades 24 kämmen, das mit der Ausgangswelle 26 einer E-Maschine 28 drehfest verbunden ist, die als Anlasser bzw. Starter für die Brennkraftmaschine und als Generator zum Laden eines nicht dargestellten Speichers für elektrische Energie betreibbar ist.

Zwischen der Ausgangswelle 26 und dem Zentrum des Planetenträgers 16, durch den die Ausgangswelle 26 hindurchgeführt wird, ist ein Freilauf 30 angeordnet.

Das Hohlrad 22 ist mittels einer Bremseinrichtung 32 festbremsbar, die mittels einer insgesamt scheibenförmigen Tellerfeder 34 betätigbar ist, die sich an einem gehäusefesten Ringlager 36 abstützt und zentral mit einem Kolben 38 verbunden ist, der in einem Zylinder 40 verschiebbar ist.

Der Innenraum des Zylinders 40 ist über eine gestrichelt eingezeichnete Leitung 42 mit einem Ventil 44 verbunden, mittels dessen die Leitung 42 wahlweise mit einer strichpunktiert dargestellten Druckleitung 46 verbindbar ist, die mit dem Schmierölkreislauf der Brennkraftmaschine verbunden ist, oder mit einer gepunktet eingezeichneten Leitung 48, die beispielsweise in den Ölsumpf der Brennkraftmaschine führt und drucklos ist.

Das Ventil 44 ist in nicht dargestellter Weise elektrisch betätigbar und derart gebaut, dass es bei Ausfall der Elektrik die Leitungen 42 und 46 selbsttätig verbindet.

Die durch das geschilderte Getriebe einstellbaren Übersetzungen sind derart, dass im Funktionszustand der Fig. 1, bei dem die Bremse 32 gelöst und damit das Hohlrad 22 frei drehbar ist, sich der Planetenradträger 16 mit gleicher Drehzahl wie die Kurbelwelle 10 dreht (kleine Übersetzung). In diesem Zustand ist der Freilauf 30 wirkungslos und wird die Ausgangswelle 26 der E-Maschine vom Planetenradträger 16 drehangetrieben, so dass bei dem in Fig. 1 dick gepunkteten Drehmomentübertragungsweg die E-Maschine 28 mit gleicher Drehzahl dreht wie der von der Kurbelwelle 10 der Brennkraftmaschine angetriebene Planetenträger 16.

Im Funktionszustand gemäß Fig. 2 ist die Bremse 32 geschlossen, so dass das Hohlrad 22 festgebremst ist bzw. steht. Das Planetengetriebe 18 ist aktiv und überträgt über den wiederum in dicken Punkten dargestellten Drehmomentübertragungsweg Drehmoment von der Kurbelwelle 10 zur E-Maschine 28, wobei die Drehzahl des Sonnenrades 24 und damit der E-Maschine 28 etwa dreimal so groß ist wie die der Kurbelwelle 10. Der Freilauf 30 ermöglicht die höhere Drehzahl der Ausgangswelle 26 der E-Maschine 28 relativ zum Planetenradträger 16.

Die Drehmomentübertragung ist in den beiden geschilderten Übersetzungen nicht nur von der Kurbelwelle 10 zur Ausgangswelle der E-Maschine 28 möglich, sondern in gleicher Weise von der E-Maschine 28 zur Kurbelwelle 10.

Im Folgenden wird das mit der Erfindung mögliche Sicherheitskonzept erläutert:
Bei intaktem Stromversorgungssystem kann das Ventil 44 willkürlich geschaltet werden, so dass die Übersetzung wahlfrei eingestellt werden kann.

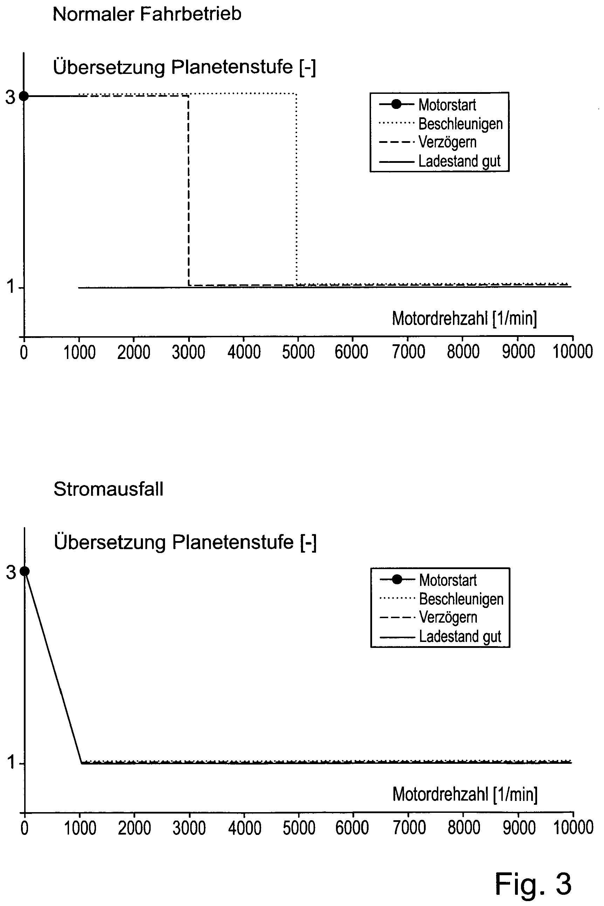

Fig. 3 zeigt in den oberen Diagrammen den normalen Fahrbetrieb, wobei auf der Abszisse die Motordrehzahl und auf der Ordinate die Übersetzung angegeben ist.

Zum Anlassen des Motors (dicker Punkt) wird das System mit großer Übersetzung betrieben, d.h. mit angelegter Bremse.

Bei Beschleunigung des Fahrzeugs (punktierte Linie) erfolgt die Übersetzungsumschaltung bei 5000 min⁻¹, indem der Zustand gemäß Fig. 1 eingestellt wird. Bei Verzögerung des Fahrzeugs (gestrichelte Kurve) unterhalb eine Drehzahl von 3000 min⁻¹ und schlechtem Ladezustand der Batterie wird mit der Übersetzung 3 (große Übersetzung) gefahren, indem der Zylinder 40 durch entsprechende Stellung des Ventils 44 drucklos ist und die Bremse durch die Kraft der Tellerfeder 34 angelegt ist.

Bei gutem Ladezustand der Batterie wird in allen Drehzahlbereichen des Motors mit kleiner Übersetzung gefahren.

Die unteren Diagramme der Fig. 3 zeigen den Betrieb bei Stromausfall, d.h. nicht aktiv schaltbarem Ventil 44.

Beim Anlassen des Motors steht kein Motorschmieröldruck zur Verfügung, so dass die Bremse durch die Kraft der Tellerfeder 34 angelegt ist (Fig. 2). Das System arbeitet mit großer Übersetzung zum Anlassen des Motors. Das Ventil 44 befindet sich bei Stromlosigkeit im Zustand der Fig. 1, d.h. verbindet die Druckleitung 46 mit dem Zylinder 40, so dass sich beim Hochlaufen des Motors im Zylinder 40 Druck aufbaut, der die Bremse 32 öffnet und auf niedere Übersetzung umschaltet. Die E-Maschine 28 ist auf diese Weise sicher vor einem Überdrehen geschützt.

Das als Beispiel geschilderte Getriebe mit dessen Steuerung kann in vielfältiger Weise abgeändert werden. Die Übersetzungen sind nur als Beispiel angegeben und können verändert werden. Die Umschaltpunkte können ebenfalls anders gewählt sein. Das Getriebe kann ebenso wie die Betätigung der Bremse in unterschiedlichster Weise ausgeführt sein, solange nur die in den Ansprüchen gekennzeichneten Funktionalitäten erzielt werden.

### Bezugszeichenliste

- 10: Kurbelwelle
- 12: Zahnrad
- 14: Zahnkette
- 16: Planetenradträger
- 18: Planetengetriebe
- 20: Planetenrad
- 22: Hohlrad
- 24: Sonnenrad
- 26: Ausgangswelle
- 28: E-Maschine
- 30: Freilauf
- 32: Bremseinrichtung
- 34: Tellerfeder
- 36: Ringlager
- 38: Kolben
- 40: Zylinder
- 42: Leitung
- 44: Ventil
- 46: Druckleitung
- 48: Leitung

## Patentansprüche

1. Getriebe zum Koppeln einer Starter-Generator-E-Maschine (28) mit einer Brennkraftmaschine mit von der Drehzahl der Brennkraftmaschine abhängiger Übersetzung, wobei das Verhältnis der Drehzahl der E-Maschine zu der der Brennkraftmaschine bei einer niedrigen Drehzahl der Brennkraftmaschine größer ist als bei einer hohen Drehzahl der Brennkraftmaschine und für die Übersetzungsumschaltung eine Umschalteinrichtung (32, 34, 38, 40, 44) vorgesehen ist,
**dadurch gekennzeichnet, dass**
die Umschalteinrichtung (32, 34, 38, 40, 44) mittels Federkraft in einem Zustand gehalten ist, in dem das Drehzahlverhältnis groß ist, und mit steigender Drehzahl der Brennkraftmaschine in einen Zustand geschaltet werden kann, in dem das Drehzahlverhältnis kleiner ist.

2. Getriebe nach Anspruch 1, **dadurch gekennzeichnet, dass** eine Ausgangswelle der E-Maschine (28) drehfest mit einem Sonnenrad (24) eines Planetengetriebes (18) verbunden ist, eine Ausgangswelle (10) der Brennkraftmaschine drehfest mit einem Planetenradträger (16) verbunden ist, der über einen Freilauf (30) mit dem Sonnenrad gekuppelt ist, der ermöglicht, dass das Sonnenrad mit höherer Drehzahl als der Planetenradträger dreht, und dass die Planetenräder mit einem Hohlrad (22) kämmen, an dem die Umschalteinrichtung (32, 34, 38, 40, 44) angreift.

3. Getriebe nach Anspruch 2, **dadurch gekennzeichnet, dass** die Umschalteinrichtung (32, 34, 38, 40, 44) eine an dem Hohlrad (22) angreifende Bremse (32) enthält, die durch die Kraft der Feder (34) geschlossen wird.

4. Getriebe nach Anspruch 3, **dadurch gekennzeichnet, dass** die Umschalteinrichtung (32, 34, 38, 40, 44) eine mit Schmieröl der Brennkraftmaschine beaufschlagbare Kolben-/Zylindereinheit (38, 40) enthält, mittels der die Bremse (32) gegen die Kraft der Feder (34) lösbar ist.

5. Getriebe nach Anspruch 4, **dadurch gekennzeichnet, dass** in einer Zuleitung (42) zu der Kolben-/Zylindereinheit (38, 40) ein Ventil (44) angeordnet ist, über das die Kolben-/Zylindereinheit wahlweise mit einer Schmieröl der Brennkraftmaschine führenden Leitung (46) oder einer drucklosen Leitung (48) verbindbar ist.

6. Getriebe nach Anspruch 5, **dadurch gekennzeichnet, dass** das Ventil (44) elektrisch betätigbar ist und bei Stromausfall selbsttätig öffnet und die Kolben-/Zylindereinheit (38, 40) mit der Schmieröl der Brennkraftmaschine führenden Leitung (46) verbindet.

7. Getriebe nach einen der Ansprüche 4 bis 6, **dadurch gekennzeichnet, dass** die Feder als insgesamt scheibenförmige Tellerfeder (34) ausgebildet ist, die an ihrem radial äußeren Umfang mit der Bremse (32) zusammenwirkt, an ihrem radial inneren Umfang mit dem Kolben (38) der Kolben-/Zylindereinheit (38, 40) zusammenwirkt und sich in einem Zwischenbereich an einem Ringlager (36) abstützt.

8. Getriebe nach einen der Ansprüche 4 bis 6, **dadurch gekennzeichnet, dass** die Feder als insgesamt scheibenförmige Tellerfeder (34) ausgebildet ist, die sich an ihrem radial äußeren Umfang an einem Ringlager (36) abstützt, an ihrem radial inneren Umfang mit dem Kolben (38) der Kolben-/Zylindereinheit (38, 40) zusammenwirkt und in einem Zwischenbereich mit der Bremse (32) zusammenwirkt.

## Claims

1. Transmission for coupling a starter-generator electric machine (28) to an internal combustion engine with a transmission ratio which is dependent on the rotational speed of the internal combustion engine, wherein the ratio of the rotational speed of the electric machine to that of the internal combustion engine is higher in the presence of a low rotational speed of the internal combustion engine than in the presence of a high rotational speed of the internal combustion engine, and a switchover device (32, 34, 38, 40, 44) is provided for the transmission ratio switchover,
**characterized in that**
the switchover device (32, 34, 38, 40, 44) is held by means of spring force in a state in which the rotational speed ratio is high, and with increasing rotational speed of the internal combustion engine, a switch can be performed into a state in which the rotational speed ratio is lower.

2. Transmission according to Claim 1, **characterized in that** an output shaft of the electric machine (28) is connected rotationally conjointly to a sun gear (24) of the planetary gear set (18), an output shaft (10) of the internal combustion engine is connected rotationally conjointly to a planet gear carrier (16), which is coupled to the sun gear by means of a freewheel (30) which enables the sun gear to rotate at a higher rotational speed on the planet gear carrier, and **in that** the planet gears mesh with an internal gear (22), on which the switchover device (32, 34, 38, 40, 44) engages.

3. Transmission according to Claim 2, **characterized in that** the switchover device (32, 34, 38, 40, 44) comprises a brake (32) which engages on the internal gear (22) and which is closed by the force of the spring (34).

4. Transmission according to Claim 3, **characterized in that** the switchover device (32, 34, 38, 40, 44) comprises a piston/cylinder unit (38, 40) which can be charged with lubricating oil of the internal combustion engine and by means of which the brake (32) can be released counter to the force of the spring (34).

5. Transmission according to Claim 4, **characterized in that**, in a feed line (42) to the piston/cylinder unit (38, 40), there is arranged a valve (44) by means of which the piston/cylinder unit is selectively connectable to a line (46), which conducts lubricating oil of the internal combustion engine, or to an unpressurized line (48).

6. Transmission according to Claim 5, **characterized in that** the valve (44) is electrically actuable and, in the event of electrical failure, automatically opens and connects the piston/cylinder unit (38, 40) to the line (46) that conducts lubricating oil of the internal combustion engine.

7. Transmission according to one of Claims 4 to 6, **characterized in that** the spring is formed as an altogether disk-shaped plate spring (34) which, at its radially outer circumference, interacts with the brake (32), at its radially inner circumference, interacts with the piston (38) of the piston/cylinder unit (38, 40), and in an intermediate region, is supported on a ring-shaped bearing (36).

8. Transmission according to one of Claims 4 to 6, **characterized in that** the spring is formed as an altogether disk-shaped plate spring (34) which, at its radially outer circumference, is supported on a ring-shaped bearing (36), at its radially inner circumference, interacts with the piston (38) of the piston/cylinder unit (38, 40), and in an intermediate region, interacts with the brake (32).

## Revendications

1. Transmission destinée à accoupler une machine électrique à starter-générateur (28) à un moteur à combustion interne, avec un rapport de démultiplication dépendant du régime du moteur à combustion interne, le rapport du régime de la machine électrique à celui du moteur à combustion interne, dans le cas d'un faible régime du moteur à combustion interne, étant supérieur au rapport dans le cas d'un régime élevé du moteur à combustion interne, et un dispositif de commutation (32, 34, 38, 40, 44) étant prévu pour commuter le rapport de démultiplication,
**caractérisée en ce que**
le dispositif de commutation (32, 34, 38, 40, 44) est maintenu au moyen d'une force de ressort dans un état dans lequel le rapport de régimes est grand et peut être commuté lors d'une augmentation du régime du moteur à combustion interne dans un état dans lequel le rapport de régimes est plus petit.

2. Transmission selon la revendication 1, **caractérisée en ce qu'**un arbre de sortie de la machine électrique (28) est connecté de manière solidaire en rotation à une roue solaire (24) d'un engrenage planétaire (18), un arbre de sortie (10) du moteur à combustion interne est connecté de manière solidaire en rotation à un porte-satellites (16) qui est accouplé à la roue solaire par le biais d'une roue libre (30), qui permet à la roue solaire de tourner avec une vitesse de rotation plus élevée que le porte-satellites, et **en ce que** les satellites s'engrènent avec une couronne dentée (22) avec laquelle vient en prise le dispositif de commutation (32, 34, 38, 40, 44).

3. Transmission selon la revendication 2, **caractérisée en ce que** le dispositif de commutation (32, 34, 38, 40, 44) comprend un frein (32) venant en prise avec la couronne dentée (22), lequel est fermé par la force du ressort (34).

4. Transmission selon la revendication 3, **caractérisée en ce que** le dispositif de commutation (32, 34, 38, 40, 44) comprend une unité cylindre-piston (38, 40) pouvant être sollicitée avec de l'huile de lubrification du moteur à combustion interne, au moyen de laquelle le frein (32) peut être desserré à l'encontre de la force du ressort (34).

5. Transmission selon la revendication 4, **caractérisée en ce qu'**une soupape (44) est disposée dans une conduite d'alimentation (42) allant à l'unité cylindre-piston (38, 40), par le biais de laquelle l'unité cylindre-piston peut être connectée de manière sélective à une conduite (46) conduisant de l'huile de lubrification du moteur à combustion interne ou à une conduite sans pression (48).

6. Transmission selon la revendication 5, **caractérisée en ce que** la soupape (44) peut être actionnée électriquement et, en cas de panne de courant, s'ouvre automatiquement et relie l'unité cylindre-piston (38, 40) à la conduite (46) conduisant l'huile de lubrification du moteur à combustion interne.

7. Transmission selon l'une quelconque des revendications 4 à 6, **caractérisée en ce que** le ressort est réalisé sous forme de ressort à coupelle dans l'ensemble en forme de disque (34), qui coopère au niveau de sa périphérie radialement extérieure avec le frein (32), au niveau de sa périphérie radialement intérieure avec le piston (38) de l'unité cylindre-piston (38, 40), et qui s'appuie dans une région intermédiaire contre un palier annulaire (36).

8. Transmission selon l'une quelconque des revendications 4 à 6, **caractérisée en ce que** le ressort est réalisé sous forme de ressort à coupelle dans l'ensemble en forme de disque (34), qui s'appuie au niveau de sa périphérie radialement extérieure contre un palier annulaire (36), coopère au niveau de sa périphérie radialement intérieure avec le piston (38) de l'unité cylindre-piston (38, 40) et coopère dans une région intermédiaire avec le frein (32).
